# EUROPEAN PATENT APPLICATION

(11) **EP 1 274 212 A1**
(43) Date of publication of application: **08.01.2003**
(21) Application number: 01128220.9
(22) Date of filing: 28.11.2001
(51) Int. Cl.: H04L 29/06

(54) **Method and device avoiding unauthorized access**

(30) Priority: 04.07.2001 JP 2001202954
(71) Applicant: Allied Telesis K. K., Shinagawa-ku, Tokyo 141-8635 (JP)
(72) Inventor: Sato, Takayuki, Allied Telesis K.K, Tokyo 141-8635 (JP)
(74) Representative: Gesthuysen, von Rohr & Eggert

(57) **Abstract**

When a first access from an external apparatus occurs to an intelligent interconnecting device and the external apparatus is authenticated in authentication processing based on a TCP/IP protocol in the intelligent interconnecting device, the intelligent interconnecting device stores therein a source IP address of the external apparatus. When an access from an external apparatus occurs thereafter, a response to the access is permitted only when a source IP address of the external apparatus giving the access is identical with the source IP address stored in advance.

## Description

The present invention relates to a interconnecting device having a packet repeating function and the like in what is called a LAN (Local Area Network) system, and more particularly to an unauthorized access avoiding method, an unauthorized access avoiding program, a recording medium in which an unauthorized access avoiding program is recorded, an intelligent interconnecting device, and a LAN system which realize security improvement and so on in what is known as an intelligent interconnecting device whose operation is controllable from outside.

What is known as a packet interconnecting device which is represented by what is called a hub and a router is an apparatus indispensable for configuring a LAN system and various kinds of packet interconnecting devices having various functions in addition to basic functions have been proposed according to forms and so on of LAN systems (for example, refer to Japanese Patent Laid-open No. Hei 5-327720). In some of these interconnecting devices, what is known as management functions such as monitoring operational status and setting operation conditions of the interconnecting devices particularly through communication with external computers are provided and these interconnecting devices are generally called intelligent interconnecting devices.

In a conventional LAN system to which this intelligent interconnecting device is applied to configure the LAN system, an IP address is given to the intelligent interconnecting device and what is called TCP/IP communication processing is performed for processing communication between a managing computer and the intelligent interconnecting device so that setting, changing, and the like of various operation conditions and so on of the intelligent interconnecting device are controllable by remote control from the managing computer which is connected to the LAN system. More specifically, what is called TCP/IP protocols of various kinds such as TELNET (RFC854), SNMP (RFC1157), TFTP (RFC1350), ICMP (RFC792), and HTTP (RFC1945) are selectively used according to forms of communication between the managing computer and the intelligent interconnecting device.

For example, unauthorized operation of the intelligent interconnecting device by someone other than a managing party thereof is conventionally prevented in such a manner in which log-in to the intelligent interconnecting device is made possible by the FTP (RFC765), a user identifier and a password are requested to be inputted after the log-in, and only when they are identical with a predetermined identifier and a predetermined password, the access is authenticated as an access from the managing party and the operation thereafter from this outside managing party is permitted.

However, since security for the intelligent interconnecting device is dependent only on the protocol in the above conventional structure and some of the TCP/IP protocols have no security function, the conventional structure does not always guarantee highly reliable security. In other words, take the above conventional apparatus for example, it does not satisfactorily guarantee security since the authentication by using the inputted user identifier and password after the log-in, which is one of the functions that the FTP has, is not a function which is specially provided from a viewpoint of preventing an unauthorized access to the intelligent interconnecting device and furthermore, it has a disadvantage that an access is easily authenticated as long as the inputted user identifier and password are identical with the predetermined user identifier and password even when the access is from a computer other than the managing computer.

It is an object of the present invention to provide an unauthorized access avoiding method in an intelligent interconnecting device, an unauthorized access avoiding program for an intelligent interconnecting device, a recording medium in which an unauthorized access avoiding program for an intelligent interconnecting device is recorded, an intelligent interconnecting device, and a LAN system which surely realize prevention of an access from a computer other than a pre-designated computer without depending on a security function of a protocol and/or which improve the security.

The above object is achieved by a method, device, LAN system, program or recording medium according to any one the independent claims. Preferred embodiments are subject of the subclaims.

It is a further aspect of the present invention to provide an unauthorized access avoiding method in an intelligent interconnecting device, an unauthorized access avoiding program for an intelligent interconnecting device, a recording medium in which an unauthorized access avoiding program for an intelligent interconnecting device is recorded, an intelligent interconnecting device, and a LAN system which realize strengthening of a security function to improve reliability only with some new functions added to existing software.

It is still another aspect of the present invention to provide an unauthorized access avoiding method in an intelligent interconnecting device, an unauthorized access avoiding program for an intelligent interconnecting device, a recording medium in which an unauthorized access avoiding program for an intelligent interconnecting device is recorded, an intelligent interconnecting device, and a LAN system which realize simplification of software for guaranteeing security.

In order to achieve the above objects and aspects of the present invention, according to a first embodiment of the present invention, it is preferably provided an unauthorized access avoiding method in an intelligent interconnecting device having a function of repeating a packet which is transmitted/received between a plurality of computers and being structured to be controllable by an external apparatus based on a TCP/IP protocol, the unauthorized access avoiding method in an intelligent interconnecting device comprising the following steps:
- when an access from an external apparatus is authenticated through execution of the TCP/IP protocol, extracting and storing a source IP address included in a packet which is transmitted from the external apparatus;
- when an access from an external apparatus occurs thereafter, judging whether or not a source IP address of the external apparatus giving the access is identical with the stored source IP address; and
- only when the source IP address of the external apparatus is judged to be identical with the stored source IP address, permitting communication thereafter between the external apparatus having the source IP address identical with the stored source IP address and the intelligent interconnecting device.

In this method, after the source IP address of the external apparatus is once authenticated through the execution of the TCP/IP protocol, the source IP address included in the packet which is transmitted from the external apparatus at the time of executing the protocol is extracted and stored so that, when some access occurs from an external apparatus thereafter whose source IP address is judged to be non-identical with the stored source IP address, the external apparatus is determined as an apparatus not to be responded to. Therefore, a conventional disadvantage that an access is permitted even with a non-identical source IP address as long as a user identifier and a password thereof are identical with a predetermined identifier and a predetermined password is surely eliminated. Consequently, security is further improved with a simple structure compared with a conventional method.

According to a second embodiment of the present invention, an unauthorized access avoiding program which is executed in an intelligent interconnecting device having a function of repeating a packet which is transmitted/received between a plurality of computers and being structured to be controllable by an external apparatus based on a TCP/IP protocol is provided, the unauthorized access avoiding program for an intelligent interconnecting device comprising the following steps:
- a first step of causing the intelligent interconnecting device to judge whether or not a first access to the intelligent interconnecting device from outside has occurred;
- a second step of causing the intelligent interconnecting device to carry out authentication processing by using a user identifier and a password based on the TCP/IP protocol when it is judged in the first step that the first access from outside has occurred;
- a third step of causing the intelligent interconnecting device to judge after the authentication processing in the second step whether or not authentication is given;
- a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
- a fifth step of causing the intelligent interconnecting device to extract and store a source IP address included in a packet which is received from the external apparatus in the authentication processing when this access of the external apparatus is judged to be the first access in the fourth step;
- a sixth step of determining the external apparatus as an apparatus not to be responded to thereafter by the intelligent interconnecting device when the external apparatus is judged not to be authenticated in the third step;
- a seventh step of causing the intelligent interconnecting device to judge whether or not the source IP address of the external apparatus giving the access thereto is identical with the stored source IP address when this access is judged not to be the first access in the first step;
- an eighth step of determining the external apparatus whose source IP address is judged to be identical with the stored source IP address as an apparatus to be responded to thereafter by the intelligent interconnecting device and causing the intelligent interconnecting device to process the steps beginning from the second step when the source IP address of the external apparatus is judged to be identical with the stored source IP address in the seventh step; and
- a ninth step of determining the external apparatus whose source IP address is judged to be non-identical with the stored source IP address as an apparatus not to be responded to thereafter by the intelligent interconnecting device when the source IP address of the external apparatus is judged to be non-identical with the stored source IP address in the seventh step.

This structure is particularly appropriate for carrying out the unauthorized access avoiding method in an intelligent interconnecting device in the first embodiment of the present invention and is realizable, for example, by what is called a microcomputer, or a circuit and software having functions equivalent thereto.

According to a third embodiment of the present invention, a recording medium in which a computer readable unauthorized access avoiding program which is executed in an intelligent interconnecting device having a function of repeating a packet which is transmitted/received between a plurality of computers and being structured to be controllable by an external apparatus based on a TCP/IP protocol is recorded is provided, wherein the unauthorized access avoiding program comprises the following steps:
- a first step of causing the intelligent interconnecting device to judge whether or not a first access to the intelligent interconnecting device from outside has occurred;
- a second step of causing the intelligent interconnecting device to carry out authentication processing by using a user identifier and a password based on the TCP/IP protocol when it is judged in the first step that the first access from outside has occurred;
- a third step of causing the intelligent interconnecting device to judge after the authentication processing in the second step whether or not authentication is given;
- a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
- a fifth step of causing the intelligent interconnecting device to extract and store a source IP address included in a packet which is received from the external apparatus in the authentication processing when this access of the external apparatus is judged to be the first access in the fourth step;
- a sixth step of determining the external apparatus as an apparatus not to be responded to thereafter by the intelligent interconnecting device when the external apparatus is judged not to be authenticated in the third step;
- a seventh step of causing the intelligent interconnecting device to judge whether or not the source IP address of the external apparatus giving the access thereto is identical with the stored source IP address when this access is judged not to be the first access in the first step;
- an eighth step of determining the external apparatus whose source IP address is judged to be identical with the stored source IP address as an apparatus to be responded to thereafter by the intelligent interconnecting device and causing the intelligent interconnecting device to process the steps beginning from the second step when the source IP address of the external apparatus is judged to be identical with the stored source IP address in the seventh step; and
- a ninth step of determining the external apparatus whose source IP address is judged to be non-identical with the stored source IP address as an apparatus not to be responded to thereafter by the intelligent interconnecting device when the source IP address of the external apparatus is judged to be non-identical with the stored source IP address in the seventh step.

According to a fourth embodiment of the present invention, an intelligent interconnecting device having a function of repeating a packet which is transmitted/received between a plurality of computers and being structured to be controllable by an external apparatus based on a TCP/IP protocol is provided, the intelligent interconnecting device comprising the following:
- a LAN trunk line interfacing section having an interface function with a LAN trunk line;
- a port interfacing section having an interface function with a terminal connected thereto;
- a storage section for storing a program and data therein, and
- a central controlling section for controlling operations of the LAN trunk line interfacing section, the port interfacing section, and the storage section, and wherein the central controlling section processes the following:

- when an access from an external apparatus is authenticated through execution of the TCP/IP protocol, to extract a source IP address included in a packet which is transmitted from the external apparatus and store it in the storage section;
- when an access from an external apparatus occurs thereafter, to judge whether or not a source IP address of the external apparatus giving the access is identical with the stored source IP address; and
- only when the source IP address is judged to be identical with the stored source IP address, to permit communication thereafter with the external apparatus having the source IP address identical with the stored source IP address.

Further details, aspects and advantages will be explained with reference to the enclosed drawings. It shows:
- FIG. 1: a schematic view showing a structure example of a LAN system according to an embodiment of the present invention;
- FIG. 2: a schematic view showing a structure example of an intelligent interconnecting device which is used in the LAN system shown in FIG. 1;
- FIG. 3: a subroutine flow chart showing a processing procedure in a first example of unauthorized access avoiding processing executed by the intelligent interconnecting device shown in FIG. 2; and
- FIG. 4: a subroutine flow chart showing a processing procedure in a second example of unauthorized access avoiding processing executed by the intelligent interconnecting device shown in FIG. 2.

Embodiments of the present invention are explained in detail below with reference to the attached drawings.

It is to be understood that members, arrangements, and so on which are explained below are not restrictive of the present invention and various improvements and modifications may be made within the scope and spirit of the present invention.

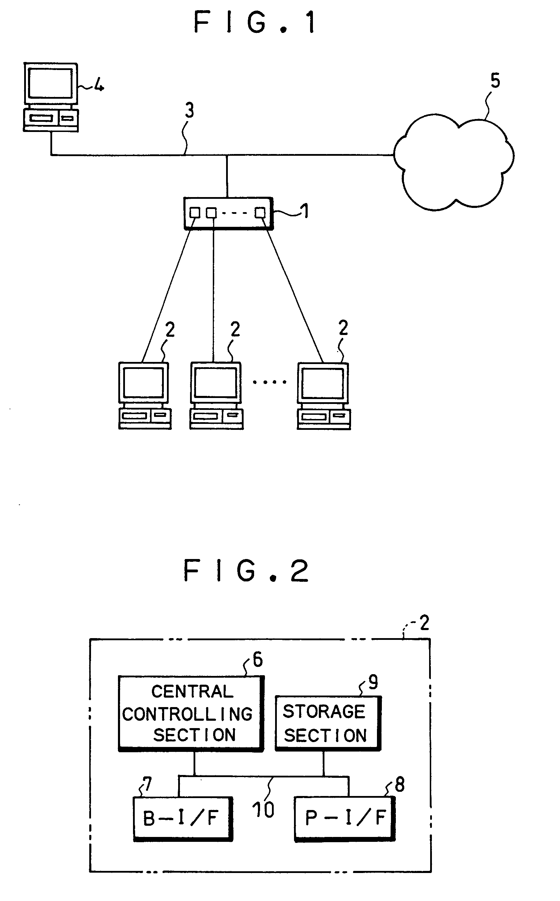

First, the structure of a LAN system to which an intelligent interconnecting device according to an embodiment of the present invention is applied to configure the LAN system is explained with reference to FIG. 1.

What is called personal computers 2 as a plurality of terminals and a LAN trunk line 3 are connected to an intelligent interconnecting device 1 in this LAN system. To the LAN trunk line 3, at least a managing computer 4 is connected and furthermore, a different network 5 may also be connected. The managing computer 4, which is connected directly to the LAN trunk line 3 in this structure, may alternatively be connected to the LAN trunk line 3 via the different network 5.

Incidentally, the managing computer 4 may also work as a server or alternatively, the server may be provided separately in addition to the managing computer 4.

The intelligent interconnecting device 1 is composed of operation and function which are controllable from outside as well as packet interconnecting capability.

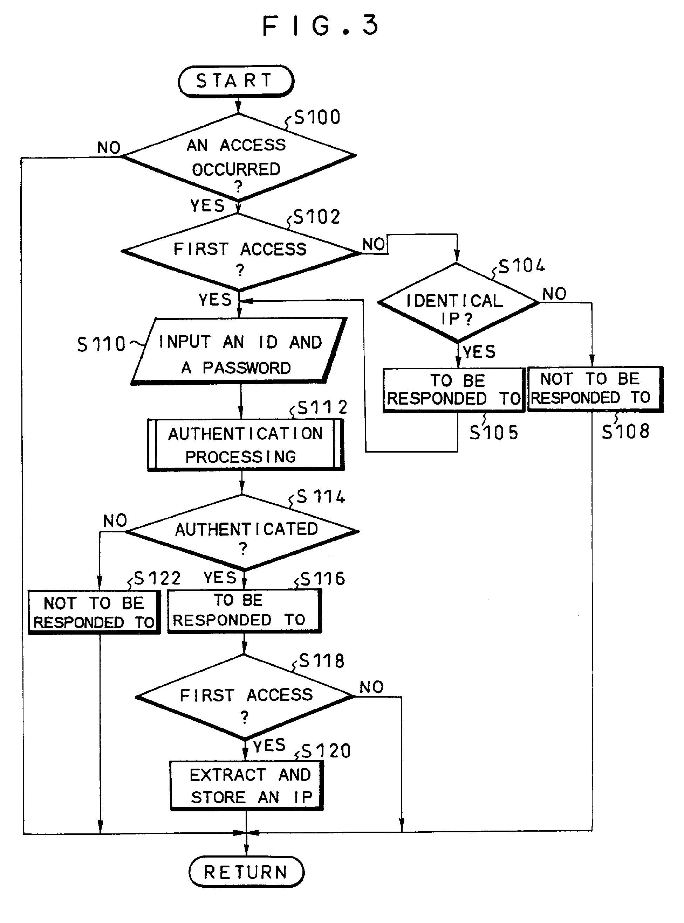

FIG. 2 shows a structure example of the intelligent interconnecting device 1. The structure thereof and so forth are explained below with reference to FIG. 2.

The intelligent interconnecting device 1 comprises a central controlling section 6, a LAN trunk line interfacing section (shown as 'B-I/F' in FIG. 2) 7, a port interfacing section (shown as 'P-I/F' in FIG. 2) 8, and a storage section 9, which are connected with one another via a common internal bus 10. This structure is not basically different from that of a conventional apparatus except that the central controlling section 6 performs unauthorized access avoiding processing, which is described later.

The central controlling section 6 performs operation control of the whole intelligent interconnecting device 1 in this structure and particularly, in the embodiment of the present invention, executes the later described unauthorized access avoiding processing.

The LAN trunk line interfacing section 7 interfaces the intelligent interconnecting device 1 with the LAN trunk line 3 and the port interfacing section 8 interfaces the intelligent interconnecting device 1 with the personal computers 2 as terminals.

The storage section 9 stores therein various programs to be executed by the central controlling section 6 and also stores data therein which is given thereto and is to be sent out therefrom via the LAN trunk line interfacing section 7 and the port interfacing section 8. The storage section 9 has a storage area whose storage content is not erased even when the power supply is cut off and a storage area whose storage content is erased when the power supply is cut off so that data is selectively stored in the respective areas according to its use and so on. The storage section 9, which is realizable by a generally known storage element and therefore, is not explained in detail, is appropriately structured, for example, by using a hard disk and the like as well as a semiconductor memory such as what is called an RAM and an ROM, and the like.

Note that, according to the embodiment of the present invention, a TCP/IP protocol is stored in the area of the storage section 9 whose storage content is not erased even when the power supply is cut off, and it is executed by the central controlling section 6 when necessary. Incidentally, among various TCP/IP protocols, any TCP/IP protocol may be used as long as it is appropriate for executing the unauthorized access avoiding processing, which is described later, and more specifically as long as it carries out what is known as authentication processing by using a user identifier and a password.

Moreover, in the storage section 9, an IP address given in advance to the intelligent interconnecting device 1, and a user identifier (ID) and a password necessary for authentication of an access from an external apparatus based on the TCP/IP protocol are stored in advance in the area whose content is not erased even when the power supply is cut off.

A first example of the unauthorized access avoiding processing executed by the central controlling section 6 is explained next with reference to FIG. 3.

To explain first, it is premised that the unauthorized access avoiding processing is executed as one step of subroutine processing in main routine processing executed in the central controlling section 6.

When the central controlling section 6 starts the processing, it is first judged whether or not an access from outside has occurred to the intelligent interconnecting device 1 (refer to a step S100 in FIG. 3). When it is judged that the access from outside has occurred (YES), the procedure proceeds to a next step S102. Meanwhile, when it is judged in the step S100 that no access from outside has occurred (NO), this subroutine processing is once finished, the procedure returns to the not shown main routine processing, and this subroutine processing is started again after predetermined processing of the main routine processing.

Then, in the step S102, it is judged whether or not the access to the intelligent interconnecting device 1 from outside is a first access. When the access is judged to be the first access (YES), the procedure proceeds to a next step S110. Meanwhile, when the access is not judged to be the first access (NO), the procedure proceeds to a later described step S104.

In the step S110, a user identifier (ID) and a password are demanded from an external apparatus giving the access to the intelligent interconnecting device 1 from outside (for example, the managing computer 4) and inputs of the user identifier and the password are received.

Then, authentication processing for the inputted user identifier and password is performed (refer to a step S112 in FIG. 3).

Here, the steps S110 and S112 are processed through execution of the generally known TCP/IP protocol. In other words, the TCP/IP protocol, which is premised to be provided in the intelligent interconnecting device 1 according to the embodiment of the present invention, as is explained above in the structure explanation, is appropriately a TCP/IP protocol, in particular, capable of executing the authentication processing by using a user identifier and a password. As such a TCP/IP protocol, for example, TELNET is available. An explanation of a detailed processing procedure of this protocol is omitted here.

Then, after the authentication processing (refer to the step S112 in FIG. 3) is over, it is judged whether or not the authentication is given (refer to a step S114 in FIG. 3). Here, 'the authentication is given' means that the user identifier and the password are identical with those set in advance in the storage section 9 and the external apparatus giving the access is authenticated. 'The authentication is not given' means that the user identifier and the password are non-identical with those set in advance in the storage section 9 and the external apparatus giving the access is not authenticated.

When it is judged in the step S114 that the authentication is not given, that is, the external apparatus is not authenticated (NO), a response to the external apparatus is determined to be unallowable (refer to a step S122 in FIG. 3), a series of the subroutine processing is finished, and the procedure returns to the main routine processing for the time being. Then, in the main routine processing, processing for a case in which the response to the external apparatus is determined to be unallowable is performed according to the provided TCP/IP protocol.

Meanwhile, when it is judged in the step S114 that the authentication is given (YES), the response to the access from the external apparatus is determined to be allowable (refer to a step S116 in FIG. 3) and then, it is judged whether or not the procedure so far is the procedure for the first access from the external apparatus (refer to a step S118 in FIG. 3). Then, when the access from the external apparatus is judged to be the first access (YES), the procedure proceeds to a step S120 described next. Meanwhile, when the access is not judged to be the first access (NO), a series of the subroutine processing is finished and the procedure returns to the main routine processing since processing in the step 120 described next has already been carried out for the access and need not be repeated again.

In the processing of the step S120, an IP address of a source (the external apparatus) included in a packet which is transmitted from the external apparatus (hereinafter, referred to as a 'source IP address') is extracted and stored in a predetermined area of the storage section 9 (refer to the step S120 in FIG. 3). Note that the storage area for the source IP address in this case is appropriately an area whose storage content is not erased even when the power supply is cut off.

After the processing of the step S120 is over, a series of the subroutine processing is finished and the procedure returns to the main routine. Then, in the main routine processing, the processing for a case in which the response to the external apparatus is determined to be allowable is carried out according to the provided TCP/IP protocol.

Meanwhile, when it is judged in the aforesaid step S102 that the access is not the first access and the procedure proceeds to a step S104, it is judged whether or not the source IP address of the external apparatus (for example, the managing computer 4) giving the access is identical with a source IP address stored in the storage section 9 in advance. Incidentally, the source IP address of the external apparatus is recognizable when the source IP address included in a generally known form in the packet which is transmitted to the intelligent interconnecting device 1 from the external apparatus is extracted.

Then, when it is judged in the step S104 that the source IP address is identical with the stored source IP address (YES), the response to the external apparatus giving the access is determined to be allowable and the procedure proceeds to the processing of the aforesaid step S110 (refer to the step S106 in FIG. 3). Meanwhile, when it is judged in the step S104 that the source IP address is non-identical with the stored source IP address (NO), the response to the external apparatus is determined to be unallowable, a series of the subroutine processing is finished, and the procedure returns to the main routine (refer to a step S108 in FIG. 3). In the main routine processing, processing for a case in which the response to the external apparatus is determined to be unallowable is performed according to the provided TCP/IP protocol.

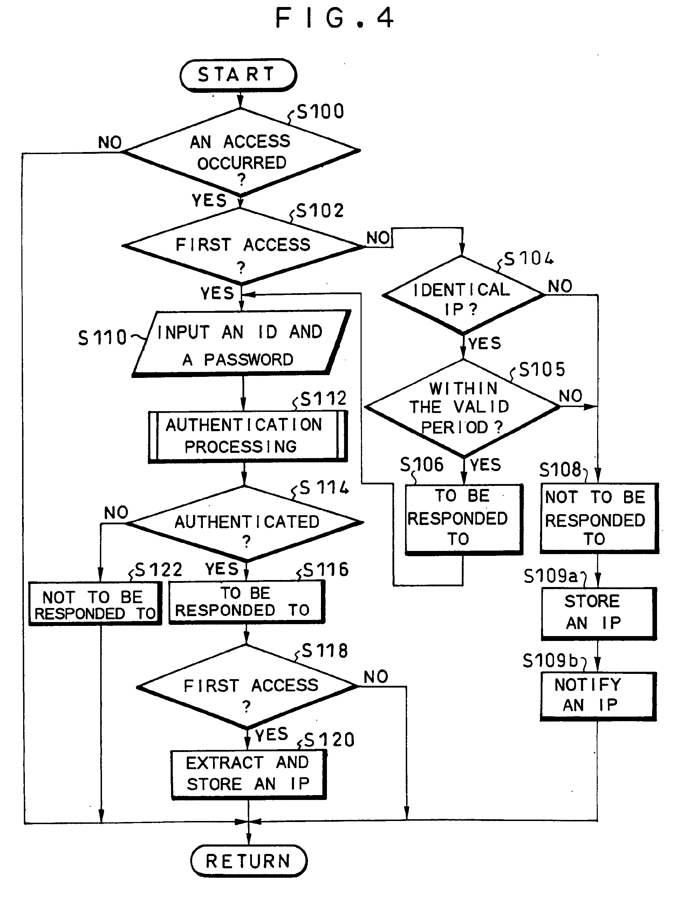

A second example of the unauthorized access avoiding processing which is executed by the central controlling section 6 is explained next with reference to FIG. 4. Note that the same processing as that shown in FIG. 3 is given the same numerals and signs and is not explained in detail. The following explanation focuses mainly on what is different from the processing shown in FIG. 3.

To summarize the content of the unauthorized access avoiding processing in the second example first, in the structure based on the unauthorized access avoiding processing in the first example shown in FIG. 3, a valid period is set for the source IP address of the external apparatus whose access is to be accepted and moreover, the source IP address which is not identical with the stored one is stored in an unauthorized access IP list and notified to a managing apparatus.

Specific explanation is given below with reference to FIG. 4. A subroutine processing shown in FIG. 4 is different from the subroutine processing shown in FIG. 3 in that steps S105, S109a, S109b are provided. The other processing content is the same as that in the subroutine processing shown in FIG. 3 and therefore, only processing content in these newly provided steps is explained below.

First, when the source IP address of the external apparatus (for example, the managing computer 4) giving the access is judged in the step S104 to be identical with the source IP address which is stored in the storage section 9 in advance (YES), it is judged whether or not this source IP address is within the valid period (refer to the step S105 in FIG. 4). In other words, the source IP address of the external apparatus whose access to the intelligent interconnecting device 1 is permitted is stored in the predetermined area of the storage section 9 as described above and the valid period is determined when the source IP address of the external apparatus is first stored. In the step S105, it is judged whether or not the source IP address is within the valid period. Incidentally, time lapse from the time of storing the source IP address needs to be recognized in order to judge whether or not it is within the valid period, which is made possible when what is known as a calendar function or clock function is executed through generally known software processing in the central controlling section 6.

Then, when the source IP address is judged in the step S105 to be within the valid period (YES), the response to the external apparatus giving the access is determined to be allowable and the procedure proceeds to the processing of the step S110 (refer to the step S106 in FIG. 4).

Meanwhile, when it is judged in the step S104 that the source IP address is non-identical with the stored source IP address, or is not within the valid period, in other words, the valid period is expired, the response to the external apparatus is determined to be unallowable (refer to the step S108 in FIG. 4) and the source IP address of the external apparatus which is judged to be non-identical with the stored source IP address or not to be within the valid period in the judgment in the step S104 or the step S105 is registered in the unauthorized access IP list (refer to the step S109a in FIG. 4). In short, when an access to the intelligent interconnecting device 1 from outside occurs and a source IP address of the external apparatus giving the access is judged to be non-identical with the stored source IP address in the step S104, the source IP address which is judged to be non-identical is stored in subsequence in the unauthorized access IP list which is provided in a predetermined area of the storage section 9 to register therein the source IP address which is judged to be non-identical with the stored source IP address.

In order to notify the managing computer 4 of the source IP address which is judged to be non-identical with the stored source IP address, this source IP address is then transmitted as a predetermined packet to the managing computer 4 via the LAN trunk line interfacing section 7 (refer to the step S109b in FIG. 4). After the processing of the step 109b, the procedure returns to the main routine processing and the processing for the case in which the response to the external apparatus is determined to be unallowable is performed according to the provided TCP/IP protocol.

Incidentally, the source IP address which is judged to be non-identical with the stored source IP address is stored (refer to the step S109a in FIG. 4) and notified to the managing computer 4 (refer to the step S109b in FIG. 4) in the above second example, but only either one of the storage and the notification may be carried out.

Furthermore, the explanations of both the first and second examples are made on the premise that only one source IP address is stored in the intelligent interconnecting device 1 for the external apparatus whose access is permitted but it is not restrictive that only one source IP address is set and a plurality of them may of course be set.

When the intelligent interconnecting device 1 is structured to be operable under an SNMP (Simple Network Management Protocol) which is a network control protocol in a TCP/IP network, that is, when the intelligent interconnecting device 1 is provided with an SNMP agent and, for example, the managing computer 4 and other computers are also provided with the SNMP manager, a source IP address of the managing computer 4 is stored in the intelligent interconnecting device 1 as managing apparatus information in order to limit a transmission destination of an event notice (Trap) from the intelligent interconnecting device 1 to a specific computer, for example, only the managing computer 4 so that the Trap is transmitted only to the managing computer 4 and thereby careless spread of information can be prevented.

Furthermore, the authentication processing in the steps S110, S112 in FIG. 3 and FIG. 4 may be, for example, enciphered to improve security.

The explanation of the above structure example is made on the premise that the unauthorized access avoiding program for an intelligent interconnecting device to be executed by the central controlling section 6 is stored in a nonvolatile semiconductor memory constituting a part of the storage section 9 which works as a recoding medium of the program and is executed by being read in the central controlling section 6 from the semiconductor memory, but the use of the semiconductor memory is not of course restrictive.

More specifically, a flexible disk, a CD-ROM, an optical recording medium such as a DVD and a PD, a magneto-optic recording medium such as an MD, a magnetic recording medium, and the like may be used as a recording medium other than the semiconductor memory. Incidentally, special apparatus for reading and writing data are required for some of these recording media and the storage section 9 may of course be constituted by including these apparatus.

As described above, according to the present invention, the source IP address of the managing computer is extracted and stored from a packet which is received through the execution processing of the existing TCP/IP protocol and communication with an external apparatus having an IP address other than the stored source IP address is not allowed thereafter, which brings about an effect that security, which is not sufficiently secured in a conventional authentication processing by the TCP/IP protocol, is further improved and a system with high reliability can be provided compared with a conventional example.

Moreover, the authentication processing by the TCP/IP protocol is carried out after the source IP address is judged to be identical with the stored source IP address and therefore, sufficient security is maintained in an intelligent interconnecting device in which TCP/IP protocols of various kinds are provided by executing the authentication processing by one of these protocols. Thereby, the authentication processing by the individual protocols can be omitted. This brings about an effect that software load can be reduced.

Furthermore, a response to an access by a broadcast can be restricted. This makes it difficult for an outside intruder to recognize the existence of an apparatus to be managed, in other words, the intelligent interconnecting device to be managed by the managing computer, so that security is further improved compared with the conventional example.

In addition, the user identifier and the password, which are conventionally prepared for each protocol, can be integrated. This brings about an effect that software is allowed to be simplified.

## Claims

1. An unauthorized access avoiding method in an intelligent interconnecting device having a function of repeating a packet which is transmitted/received between a plurality of computers and being structured to be controllable by an external apparatus based on a TCP/IP protocol, wherein the method device comprises the steps of:
extracting and storing a source IP address included in a packet which is transmitted from an external apparatus when an access from the external apparatus is authenticated through execution of the TCP/IP protocol;
judging, when an access from an external apparatus occurs thereafter, whether or not a source IP address of the external apparatus giving the access is identical with the stored source IP address; and
permitting communication thereafter between the external apparatus having the source IP address identical with the stored transmitting end IP address and the intelligent interconnecting device only when the source IP address of the external apparatus is judged to be identical with the stored source IP address.

2. Method according to claim 1, **characterized that** the method further comprises the step of registering the source IP address of the external apparatus which is judged to be non-identical in an unauthorized access IP list when the source IP address is judged to be non-identical with the stored source IP address.

3. Method according to claim 1 or 2, **characterized that** the method further comprises the step of notifying an authenticated managing computer of the source IP address of the external apparatus which is judged to be non-identical when the source IP address is judged to be non-identical with the stored source IP address.

4. Method according to any one of the preceding claims, **characterized that** the method further comprises the steps of:
judging whether or not the source IP address which is judged to be identical with the stored source IP address is within a valid period set in advance when the source IP address is judged to be identical with the stored source IP address, and
permitting communication thereafter between the external apparatus having the source IP address which is judged to be within the valid period and the intelligent interconnecting device only when the source IP address of the external apparatus is judged to be within the valid period.

5. An unauthorized access avoiding program which is executed in an intelligent interconnecting device having a function of repeating a packet which is transmitted/received between a plurality of computers and being structured to be controllable by an external apparatus based on a TCP/IP protocol, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in said first step that the first access from outside has occurred;
a third step of causing the intelligent interconnecting device to judge after the authentication processing in said second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in said third step that the authentication is given;
a fifth step of causing the intelligent interconnecting device to extract and store a source IP address included in a packet which is received from the external apparatus in the authentication processing when this access of the external apparatus is judged to be the first access in said fourth step;
a sixth step of determining the external apparatus as an apparatus not to be responded to thereafter by the intelligent interconnecting device when the external apparatus is judged not to be authenticated in said third step;
a seventh step of causing the intelligent interconnecting device to judge whether or not the source IP address of the external apparatus giving the access thereto is identical with the stored source IP address when this access is judged not to be the first access in said first step;
an eighth step of determining the external apparatus whose source IP address is judged to be identical with the stored source IP address as an apparatus to be responded to thereafter by the intelligent interconnecting device and causing the intelligent interconnecting device to process the steps beginning from said second step, when the source IP address of the external apparatus is judged to be identical with the stored source IP address in said seventh step; and
a ninth step of determining the external apparatus whose source IP address is judged to be non-identical with the stored source IP address as an apparatus not to be responded to thereafter by the intelligent interconnecting device when the source IP address of the external apparatus is judged to be non-identical with the stored source IP address in said seventh step.

6. An unauthorized access avoiding program which is executed in an intelligent interconnecting device having a function of repeating a packet which is transmitted/received between a plurality of computers and being structured to be controllable by an external apparatus based on a TCP/IP protocol, preferably according to claim 5, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in said first step that the first access from outside has occurred;
a third step of causing the intelligent interconnecting device to judge after the authentication processing in said second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in said third step that the authentication is given;
a fifth step of causing the intelligent interconnecting device to extract and store a source IP address included in a packet which is received from the external apparatus in the authentication processing when this access of the external apparatus is judged to be the first access in said fourth step;
a sixth step of determining the external apparatus as an apparatus not to be responded to thereafter by the intelligent interconnecting device when the external apparatus is judged not to be authenticated in said third step;
a seventh step of causing the intelligent interconnecting device to judge whether or not the source IP address of the external apparatus giving the access thereto is identical with the stored source IP address when this access is judged not to be the first access in said first step;
an eighth step of causing the intelligent interconnecting device to judge whether or not the source IP address is within a predetermined valid period when the source IP address of the external apparatus is judged to be identical with the stored source IP address in said seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from said second step, when the source IP address of the external apparatus is judged to be within the predetermined valid period in said eighth step; and
a tenth step of determining the external apparatus whose source IP address is judged to be non-identical or is judged to be not within the predetermined valid period as an apparatus not to be responded to thereafter by the intelligent interconnecting device, when the source IP address of the external apparatus is judged to be non-identical with the stored source IP address in said seventh step or is judged to be not within the predetermined valid period in said eighth step.

7. An unauthorized access avoiding program which is executed in an intelligent interconnecting device having a function of repeating a packet which is transmitted/received between a plurality of computers and being structured to be controllable by an external apparatus based on a TCP/IP protocol, preferably according to claim 5 or 6, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in said first step that the first access from outside has occurred;
a third step of causing the intelligent interconnecting device to judge after the authentication processing in said second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in said third step that the authentication is given;
a fifth step of causing the intelligent interconnecting device to extract and store a source IP address included in a packet which is received from the external apparatus in the authentication processing when this access of the external apparatus is judged to be the first access in said fourth step;
a sixth step of determining the external apparatus as an apparatus not to be responded to thereafter by the intelligent interconnecting device when the external apparatus is judged not to be authenticated in said third step;
a seventh step of causing the intelligent interconnecting device to judge whether or not the source IP address of the external apparatus giving the access thereto is identical with the stored source IP address when this access is judged not to be the first access in said first step;
an eighth step of causing the intelligent interconnecting device to judge whether or not the source IP address is within a predetermined valid period when the source IP address of the external apparatus is judged to be identical with the stored source IP address in said seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from said second step, when the source IP address of the external apparatus is judged to be within the predetermined valid period in said eighth step; and
a tenth step of determining the external apparatus whose source IP address is judged to be non-identical or is judged to be not within the predetermined valid period as an apparatus not to be responded to thereafter by the intelligent interconnecting device and causing the intelligent interconnecting device to store therein the source IP address of the external apparatus which is determined as the apparatus not to be responded to, when the source IP address of the external apparatus is judged to be non-identical with the stored source IP address in said seventh step or is judged to be not within the predetermined valid period in said eighth step.

8. An unauthorized access avoiding program which is executed in an intelligent interconnecting device having a function of repeating a packet which is transmitted/received between a plurality of computers and being structured to be controllable by an external apparatus based on a TCP/IP protocol, preferably according to any one of claims 5 to 7, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in said first step that the first access from outside has occurred;
a third step of causing the intelligent interconnecting device to judge after the authentication processing in said second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in said third step that the authentication is given;
a fifth step of causing the intelligent interconnecting device to extract and store a source IP address included in a packet which is received from the external apparatus in the authentication processing when this access of the external apparatus is judged to be the first access in said fourth step;
a sixth step of determining the external apparatus as an apparatus not to be responded to thereafter by the intelligent interconnecting device when the external apparatus is judged not to be authenticated in said third step;
a seventh step of causing the intelligent interconnecting device to judge whether or not the source IP address of the external apparatus giving the access thereto is identical with the stored source IP address when this access is judged not to be the first access in said first step;
an eighth step of causing the intelligent interconnecting device to judge whether or not the source IP address is within a predetermined valid period when the source IP address of the external apparatus is judged to be identical with the stored source IP address in said seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from said second step, when the source IP address of the external apparatus is judged to be within the predetermined valid period in said eighth step; and
a tenth step of determining the external apparatus whose source IP address is judged to be non-identical or is judged to be not within the predetermined valid period as an apparatus not to be responded to thereafter by the intelligent interconnecting device and causing the intelligent interconnecting device to notify a predetermined managing computer of the source IP address of the external apparatus which is determined as the apparatus not to be responded to, when the source IP address of the external apparatus is judged to be non-identical with the stored source IP address in said seventh step or is judged to be not within the predetermined valid period in said eighth step.

9. Program according to claim 7, **characterized in that** the program further comprises an eleventh step of causing the intelligent interconnecting device to notify a predetermined managing computer of the source IP address of the external apparatus which is determined as the apparatus not to be responded to in said tenth step.

10. A recording medium in which a computer readable unauthorized access avoiding program executed in an intelligent interconnecting device having a function of repeating a packet which is transmitted/received between a plurality of computers and being structured to be controllable by an external apparatus based on a TCP/IP protocol is recorded, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of determining the external apparatus whose source IP address is judged to be identical with the stored source IP address as an apparatus to be responded to thereafter by the intelligent interconnecting device and causing the intelligent interconnecting device to process the steps beginning from the second step, when the source IP address of the external apparatus is judged to be identical with the stored source IP address in the seventh step; and
a ninth step of determining the external apparatus whose source IP address is judged to be non-identical with the stored source IP address as an apparatus not to be responded to thereafter by the intelligent interconnecting device when the source IP address of the external apparatus is judged to be non-identical with the stored source IP address in the seventh step.

11. A recording medium in which a computer readable unauthorized access avoiding program executed in an intelligent interconnecting device having a function of repeating a packet transmitted/received between a plurality of computers and being structured to be controllable by an external apparatus based on a TCP/IP protocol is recorded, preferably according to claim 10, wherein program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from the second step, when the source IP address of the external apparatus is judged to be within the predetermined valid period in the eighth step; and
a tenth step of determining the external apparatus whose source IP address is judged to be non-identical or is judged to be not within the predetermined valid period as an apparatus not to be responded to thereafter by the intelligent interconnecting device, when the source IP address of the external apparatus is judged to be non-identical with the stored source IP address in the seventh step or is judged to be not within the predetermined valid period in the eighth step.

12. A recording medium in which a computer readable unauthorized access avoiding program executed in an intelligent interconnecting device having a function of repeating a packet transmitted/received between a plurality of computers and being structured to be controllable by an external apparatus based on a TCP/IP protocol is recorded, preferably according to claim 10 or 11, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from the second step, when the source IP address of the external apparatus is judged to be within the predetermined valid period in the eighth step; and
a tenth step of determining the external apparatus whose source IP address is judged to be non-identical or is judged to be not within the predetermined valid period as an apparatus not to be responded to thereafter by the intelligent interconnecting device and causing the intelligent interconnecting device to store therein the source IP address of the external apparatus which is determined as the apparatus not to be responded to, when the source IP address of the external apparatus is judged to be non-identical with the stored source IP address in the seventh step or is judged to be not within the predetermined valid period in the eighth step.

13. A recording medium in which a computer readable unauthorized access avoiding program executed in an intelligent interconnecting device having a function of repeating a packet transmitted/received between a plurality of computers and being structured to be controllable by an external apparatus based on a TCP/IP protocol is recorded, preferably according to any one of claims 10 to 12, wherein the program comprises:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from the second step, when the source IP address of the external apparatus is judged to be within the predetermined valid period in the eighth step; and
a tenth step of determining the external apparatus whose source IP address is judged to be non-identical or is judged to be not within the predetermined valid period as an apparatus not to be responded to thereafter by the intelligent interconnecting device and causing the intelligent interconnecting device to notify a predetermined managing computer of the source IP address of the external apparatus which is determined as the apparatus not to be responded to, when the source IP address of the external apparatus is judged to be non-identical with the stored source IP address in the seventh step or within the predetermined valid period in the eighth step.

14. Recording medium according to claim 12, **characterized in that** the program further comprises an eleventh step of causing the intelligent interconnecting device to notify a predetermined managing computer of the source IP address of the external apparatus which is determined as the apparatus not to be responded to by the intelligent interconnecting device in the tenth step.

15. Recording medium, preferably according to any one of claims 10 to 14, **characterized in that** a program according to any one of claims 5 to 9 is recorded on the recording medium.

16. An intelligent interconnecting device having a function of repeating a packet which is transmitted/received between a plurality of computers and being structured to be controllable by an external apparatus based on a TCP/IP protocol, wherein the device comprises:
a LAN trunk line interfacing section having an interface function with a LAN trunk line;
a port interfacing section having an interface function with a terminal connected thereto;
a storage section for storing a program and data therein, and
a central controlling section for controlling operations of said LAN trunk line interfacing section, said port interfacing section, and said storage section, wherein said central controlling section executes the following steps:
to extract a source IP address included in a packet which is transmitted from an external apparatus and store it in said storage section when an access from the external apparatus is authenticated through execution of the TCP/IP protocol;
to judge, when an access from an external apparatus occurs thereafter, whether or not a source IP address of the external apparatus giving the access is identical with the stored source IP address; and
to permit communication thereafter with the external apparatus having the source IP address identical with the stored transmitting end IP address only when the source IP address is judged to be identical with the stored source IP address.

17. Device according to claim 16, **characterized in that**, when the source IP address is judged to be non-identical with the stored source IP address, said central controlling section registers the source IP address which is judged to be non-identical with the stored source IP address in an unauthorized access IP list.

18. Device according to claim 16 or 17, **characterized in that**, when the source IP address is judged to be non-identical with the stored source IP address, said controlling section notifies an authenticated managing computer of the source IP address which is judged to be non-identical with the stored source IP address.

19. Device according to any one of claims 16 to 18, **characterized in that**, when the source IP address is judged to be identical with the stored source IP address, said central controlling section judges whether or not the source IP address which is judged to be identical with the stored source IP address is within a valid period set in advance and permits communication thereafter between the external apparatus having the source IP address which is judged to be within the predetermined valid period and the intelligent interconnecting device only when it is judged to be within the valid period.

20. An intelligent interconnecting device having a function of repeating a packet which is transmitted/received between a plurality of computers and being structured to be controllable by an external apparatus based on a TCP/IP protocol, preferably according to any one claims 16 to 19, wherein the device comprises:
a LAN trunk line interfacing section having an interface function with a LAN trunk line;
a port interfacing section having an interface function with a terminal connected thereto;
a storage section for storing a program and data therein; and
a central controlling section for controlling operations of said LAN trunk line interfacing section, said port interfacing section, and said storage section, wherein said central controlling section executes the following steps:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of determining the external apparatus whose source IP address is judged to be identical with the stored source IP address as an apparatus to be responded to thereafter by the intelligent interconnecting device and causing the intelligent interconnecting device to process the steps beginning from the second step when the source IP address of the external apparatus is judged to be identical with the stored source IP address in the seventh step; and
a ninth step of determining the external apparatus whose source IP address is judged to be non-identical with the stored source IP address as an apparatus not to be responded to thereafter by the intelligent interconnecting device when the source IP address of the external apparatus is judged to be non-identical with the stored source IP address in the seventh step.

21. An intelligent interconnecting device having a function of repeating a packet which is transmitted/received between a plurality of computers and being structured to be controllable by an external apparatus based on a TCP/IP protocol, preferably according to any one claims 16 to 20, wherein the device comprises:
a LAN trunk line interfacing section having an interface function with a LAN trunk line;
a port interfacing section having an interface function with a terminal connected thereto;
a storage section for storing a program and data therein; and
a central controlling section for controlling operations of said LAN trunk line interfacing section, said port interfacing section, and said storage section, wherein said central controlling section executes the following steps:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermine valid period as an apparatus to be responded to thereafter by the intelligent interconnecting device and causing the intelligent interconnecting device to execute the steps beginning from the second step, when the source IP address of the external apparatus is judged to be within the predetermined valid period in the eighth step; and
a tenth step of determining the external apparatus whose source IP address is judged to be non-identical or is judged to be not within the predetermined valid period as an apparatus not to be responded to thereafter by the intelligent interconnecting device, when the source IP address of the external apparatus is judged to be non-identical with the stored source IP address in the seventh step or is judged to be not within the predetermined valid period in the eighth step.

22. An intelligent interconnecting device having a function of repeating a packet which is transmitted/received between a plurality of computers and being structured to be controllable by an external apparatus based on a TCP/IP protocol, preferably according to any one of claims 16 to 21, wherein the device comprises:
a LAN trunk line interfacing section having an interface function with a LAN trunk line;
a port interfacing section having an interface function with a terminal connected thereto;
a storage section for storing a program and data therein; and
a central controlling section for controlling operations of said LAN trunk line interfacing section, said port interfacing section, and said storage section, wherein said central controlling section executes the following steps:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from the second step, when the source IP address of the external apparatus is judged to be within the predetermined alid period in the eighth step; and
a tenth step of determining the external apparatus whose source IP address is judged to be non-identical or is judged to be not within the predetermined valid period as an apparatus not to be responded to thereafter by the intelligent interconnecting device and storing in said storage section the source IP address of the external apparatus which is determined as the apparatus not to be responded to, when the source IP address of the external apparatus is judged to be non-identical with the stored source IP address in the seventh step or is judged to be not within the predetermined valid period in the eighth step.

23. An intelligent interconnecting device having a function of repeating a packet which is transmitted/received between a plurality of computers and being structured to be controllable by an external apparatus based on a TCP/IP protocol, preferably according to any one of claims 16 to 22, wherein the device comprises:
a LAN trunk line interfacing section having an interface function with a LAN trunk line;
a port interfacing section having an interface function with a terminal connected thereto;
a storage section for storing a program and data therein; and
a central controlling section for controlling operations of said LAN trunk line interfacing section, said port interfacing section, and said storage section, wherein said central controlling section executes the following steps:
a first step of causing the intelligent interconnecting device to judge whether or not a first access to the intelligent interconnecting device from outside has occurred;
a second step of causing the intelligent interconnecting device to carry out authentication processing by using a user identifier and a password based on the TCP/IP protocol when it is judged in the first step that the first access from outside has occurred;
a third step of causing the intelligent interconnecting device to judge after the authentication processing in the second step whether or not authentication is given;
a fourth step of determining an authenticated external apparatus as an apparatus to be responded to thereafter by the intelligent interconnecting device and causing the intelligent interconnecting device to judge whether or not this access is the first access, when it is judged in the third step that the authentication is given;
a fifth step of causing the intelligent interconnecting device to extract and store a source IP address included in a packet which is received from the external apparatus in the authentication processing when this access of the external apparatus is judged to be the first access in the fourth step;
a sixth step of determining the external apparatus as an apparatus not to be responded to thereafter by the intelligent interconnecting device when the external apparatus is judged not to be authenticated in the third step;
a seventh step of causing the intelligent interconnecting device to judge whether or not the source IP address of the external apparatus giving the access thereto is identical with the stored source IP address when this access is judged not to be the first access in the first step;
an eighth step of causing the intelligent interconnecting device to judge whether or not the source IP address is within a predetermined valid period when the source IP address of the external apparatus is judged to be identical with the stored source IP address in the seventh step;
a ninth step of determining the external apparatus having the source IP address which is judged to be within the predetermined valid period as an apparatus to be responded to thereafter by the intelligent interconnecting device and causing the intelligent interconnecting device to execute the steps beginning from the second step, when the source IP address of the external apparatus is judged to be within the predetermined valid period in the eighth step; and
a tenth step of determining the external apparatus whose source IP address is judged to be non-identical or is judged to be not within the predetermined valid period as an apparatus not to be responded to thereafter by the intelligent interconnecting device and notifying a predetermined managing computer of the source IP address of the external apparatus which is determined as the apparatus not to be responded to, when the source IP address of the external apparatus is judged to be non-identical with the stored source IP address in the seventh step or is judged to be not within the predetermined valid period in the eighth step.

24. Device according to claim 22, **characterized in that** said central controlling section executes an eleventh step of notifying a predetermined managing computer of the source IP address of the external apparatus which is determined as the apparatus not to be responded to in the tenth step.

25. A LAN system comprising an intelligent interconnecting device having a function of repeating a packet which is transmitted/received between a plurality of computers and being structured to be controllable by an external apparatus based on a TCP/IP protocol, the intelligent interconnecting device being connected to a LAN trunk line while the plurality of computers being connected to the intelligent interconnecting device, wherein said intelligent interconnecting device is designed according to any one of claims 16 to 24.
